# EUROPEAN PATENT APPLICATION

(11) **EP 1 298 882 A2**
(43) Date of publication of application: **02.04.2003**
(21) Application number: 02102380.9
(22) Date of filing: 25.09.2002
(51) Int. Cl.: H04L 29/06

(54) **Managing a user group in a communication system**

(30) Priority: 28.09.2001 FI 20011913
(71) Applicant: Nokia Corporation, 02150 Espoo (FI)
(72) Inventor: Leinonen, Mika, 90800 Oulu (FI)
(74) Representative: Antila, Harri Jukka Tapani

(57) **Abstract**

A communication system comprising means (102A to 102B) for receiving messages according to a control protocol from terminals (100A to 100D) using the communication system, the control protocol including a registration message intended for updating the location of a terminal user. Said reception means (102A to 102B) are arranged to receive management information concerning a user group in said registration message, the communication system further comprising management means (102A to 102B) for managing the user group on the basis of the management information received.

## Description

### FIELD OF THE INVENTION

The invention relates to a solution for managing users groups in a communication system.

### BACKGROUND OF THE INVENTION

The use of Internet-based messaging services is rapidly increasing in communication systems, particularly in mobile communication systems. The application possibilities, to which message-based solutions can be implemented, are almost unlimited. Communication between users, commerce, positioning and payment of invoices are examples of such applications. Technical services, such as call forwarding, calling number delivery, authentication of a caller/receiver or implementation of user mobility represent examples of features to be carried out using a control protocol implementing the messaging services. Here, user mobility refers to the choice the user has to change location and/or the terminal in use within the area of the communication system, and nevertheless operate with the system using a single location-independent address.

On account of the short development history of the messaging services, numerous different protocols have been developed, and it has proven to be difficult to find a common standard. Several of these protocols have been closed, meaning that they have been operating in the network of one service provider only. From the network operators' and component manufacturers' perspective it has been important to try to form or select an open protocol for all users and service providers from the numerous protocols. An example of such an open protocol is SIP (Session Initiation Protocol), which is initially intended to be a control protocol of multimedia sessions. Later on, the application areas of the SIP are broadened to include instant messaging and the transmission of presence information. However, in these new application areas the SIP is only beginning to be developed, and the SIP also lacks several important features, such as managing user groups. The users are therefore not provided with a chance to create, for example, a specific terminal group, within the scope of which the terminal is able to convey instant messages and presence information.

It is thus apparent that there is a need to provide a solution that can be used to manage user groups in the new open control protocols, such as the SIP.

### BRIEF DESCRIPTION OF THE INVENTION

It is an object of the invention to provide a method and an apparatus implementing the method for managing user groups in a communication system.

The invention relates to a method for managing user groups in a communication system where a registration message is sent for updating the location information of a user in the communication system. Said registration message is used in the method for sending management information concerning the user group.

The invention also relates to a communication system comprising means for receiving messages according to a control protocol from terminals using the communication system, the control protocol including a registration message intended for updating the location of a terminal user. Said reception means are arranged to receive management information concerning a user group in said registration message, the communication system further comprising management means for managing the user group on the basis of the management information received.

The invention further relates to a subscriber terminal comprising means for communicating with a communication system using messages according to a control protocol, said control protocol including a registration message intended for updating the location of a terminal user. Said communication means are arranged to send management information of the user group in said registration message.

The preferred embodiments of the invention are disclosed in the dependent claims.

The invention relates to managing user groups in communication systems. Here, a communication system refers to a telecommunication system that allows packet-switched data transmission and may be, for example, a fixed telecommunication network or a mobile communication network comprising a packet-mode data transmission capacity. Said mobile communication network is for instance a second generations GPRS network (General Packet Radio System) or a third generation UMTS network (Universal Mobile Telephony System). The invention relates in particular to a control protocol of multimedia sessions to be used in said communication system, such as a SIP protocol, which is an application level protocol for forming, modifying and terminating sessions between one or more parties. Preferably said protocol is used together with an Internet protocol, but it can also be used with other data transmission services. As regards the present invention, functions that allow implementing the mobility of the user constitute an essential feature of said protocol. When implementing the mobility, a registration message included in the control protocol plays an important part, and by means of the registration message the user informs the communication system about his/her location.

The invention is based on the idea to use the registration message for transferring information concerning a user group. Here, a user group refers to a group of users that may interact with one another through an instant message, for example, or the users may acquire presence information about one another. Here, presence information refers to such a situation where the user is able to communicate with the network whether he/she is at work, at home or in a meeting for example, or the user may inform the network that he/she is not willing to receive messages at a particular moment. The user group is processed in the communication system preferably user-specifically, meaning that a particular user may create user groups, whose user and/or group information only he/she has the right to modify.

In the preferred embodiments of the invention the group information to be transferred in a registration message is used to implement the following functionalities in the communication system: Creation and deletion of a user group, modification and inquiry of user data, and modification and inquiry of user group properties.

In a preferred embodiment the invention relates to a SIP protocol and to a REGISTER message used therein. The information implementing the group function is conveyed in the available fields TO, FROM and CONTACT in the REGISTER message. In some embodiments the CONTACT field is associated with a new function indicator LIST that indicates the measure to be carried out for said user in the CONTACT field, such as adding or deleting a user from the user group. However, the invention is not limited to the SIP protocol but the inventive solution can be implemented in another control protocol that substantially corresponds with the SIP protocol. Said control protocol comprises a registration message that enables to update the location of the user.

The inventive solution provides such an advantage that a new message does not have to be formed in the control protocol to allow group processing, but the message associated with the control protocol as well as the fields in said message can be reused.

### BRIEF DESCRIPTION OF THE DRAWINGS

In the following the invention will be described in greater detail by means of the preferred embodiments with reference to the accompanying drawings, in which
Figure 1 shows an example of a communication system,
Figure 2 shows an example of the messaging between users and terminals,
Figure 3 shows another example of the messaging between users and terminals.

### DETAILED DESCRIPTION OF THE PREFERRED EMBODIMENTS

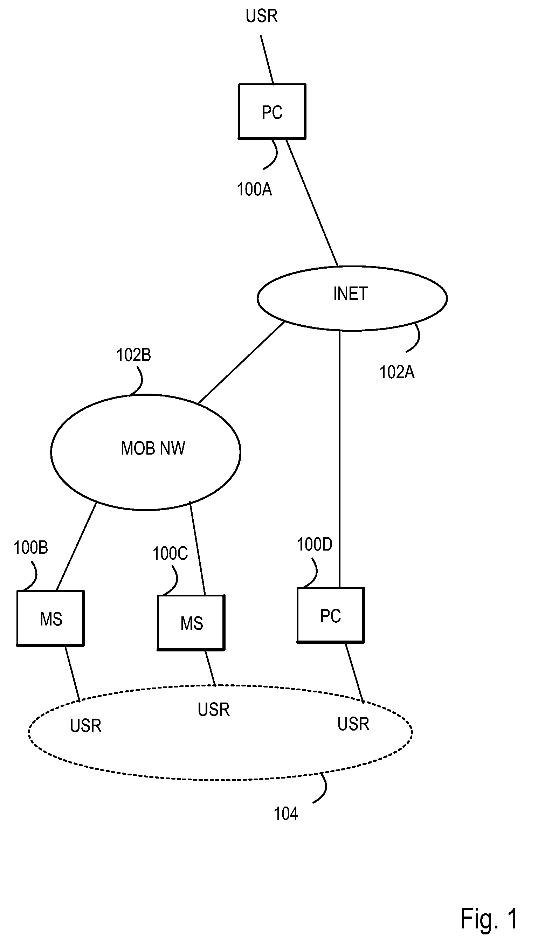

Figure 1 shows an example of a communication system according to the invention. The equipment system comprises terminals 100A to 100D, which may communicate with one another through one or more data networks 102 to 102B. The terminals can be, for example, personal computers 100A to 100B or mobile stations 100C to 100D. The data networks, in turn, can be for example fixed data networks 102A or mobile networks 102B. The data network 102A for instance, comprises as is known in the art server computers and routers. The mobile network, in turn, is built on base stations and base station controller, for example. The users may establish a connection to the data network regardless of the terminals, meaning that the users may change terminals from a mobile station to a computer depending on the location. Figure 1 also shows a user group 104 of three users created by a user of the terminal 100A.

The users employing terminals may preferably communicate with one another using instant messages. The protocol used for transferring instant messages is, for example, an Internet-based control protocol SIP. Thus, the terminal, for example a mobile station, comprises a protocol stack implementing the protocol to be used for sending and receiving messages. The terminal naturally includes an information input unit, such as a keyboard, that enables the user to feed a set of information associated with management, such as user identifiers of the users included in the set. In the terminal, the management of the user group preferably includes an end user application comprising such functions as adding users to the user group or deleting a user group. The end user application is implemented in the terminal, for example, by software or as an ASIC.

The data network illustrated in Figure 1 also comprises apparatus parts implementing the control protocol. In practice, said means are implemented in a network server, for example. The data network further includes management means for managing user group information. The management means are preferably also used to implement the function required for transferring instant messages and presence information. As regards the inventiveness of the solution, the location of the management means is not relevant, but said means can be located in the server communicating with the terminals or they may be located in another network apparatus connected to the network, or said means can be implemented in a decentralized manner in the data network. The management means of the user groups can be implemented in the communication system by software or in another corresponding manner. It is apparent that the communication system illustrated in Figure 1 does not describe all the parts in the terminals or in the data networks required for implementing the SIP protocol in the terminals or data networks, however, the description thereof is not relevant for the invention in this context.

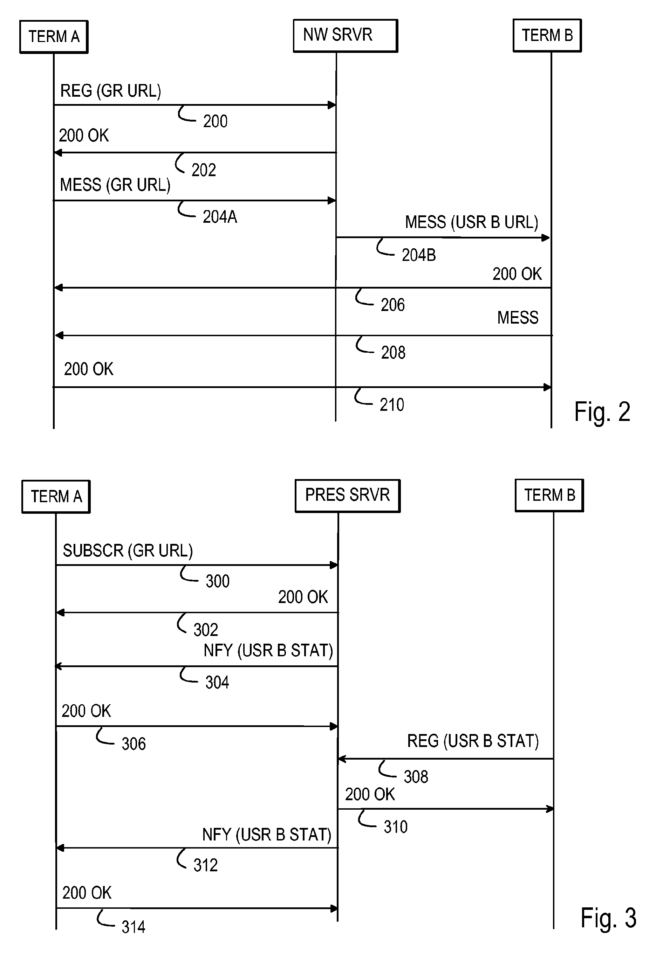

Figure 2 illustrates a preferred embodiment of the method according to the invention. In initial step 200 of the method, a registration message is sent from terminal A to a group server included in the data network. In said registration message, the user of terminal A indicates that he/she wishes to create a new user group. The server sends an acknowledgement message 202 to terminal A. The two protocol messages presented above form an essential part as regards the invention. However, for the sake of clarity Figure 2 shows how the user group is employed for transferring messages. After the creation of the user group, instant messages can for instance be sent between the user of terminal A and the users belonging to the user group, and acknowledgement information can be received concerning the messages sent.

In method step 204, the user of terminal A sends an instant message that is routed in the group server to all the terminals of the users belonging to the user group, such as terminal B. The routing can be carried out, for example, in such a manner that the server changes the group address in the message to the user addresses and duplicates the message if necessary to several users. If the server changes the address in this way, then the transmission of the instant messages can occur directly between the terminals in the future, without the routing on the server, as shown in Figure 2 regarding the acknowledgement message 206. Another alternative for implementing message routing is that the telecommunication network transfers messages for the users belonging to a group on the basis of a group address, in which case the terminals should support the reception of the message also using the group address, not only using the user address. The user can then be informed about a message addressed to a particular group address. The announcement can be carried out, for example, by showing the entire message with the recipient or by separately requesting the user whether he/she wishes to read the message. Terminal B sends the acknowledgement message 206 to terminal A. In practice, said acknowledgement message provides the user that sent the message with arrival information, meaning that the acknowledgement messages inform the sender of the message about the number of users who have received the message. If the destination of the message is changed in the network from the group address to a single user address, then the sender receives an acknowledgement from all the users and in addition thereto the addresses of all the users that have received the message. An instant message 208 sent from terminal B and a corresponding acknowledgement message 210 are also shown in Figure 2.

Figure 3 shows a second preferred embodiment of the method according to the invention. In initial step 300 of the method, terminal A transfers a subscription message SUBSCRIBE using the user group name. The idea of the message is to inform the server maintaining presence information that the user wishes to obtain presence information about the users belonging to the user group. The server sends an acknowledgement message 302 as a reply to the subscription message. Immediately after the order 300 the server sends in a preferred embodiment presence information about the users belonging to the user group, as a NOTIFY message 304 of the SIP protocol illustrates in the Figure. When user B registers into the network using a registration message 308, the server sends, in addition to an acknowledgement 310, presence information about user B to user A using a message 312. One way to transfer presence information within the scope of a user group is illustrated above. Another alternative is that a single user maintains presence information about the users belonging to the group. The other users may then order presence information from said maintainer, in which case the maintainer sends the required notifications on behalf of the members in the group. A further alternative for transferring presence information is that the server conveying presence information modifies the user addresses and routes the messages substantially in a corresponding fashion as described above in connection with instant messages in Figure 2.

In the following, examples are presented regarding management measures of the user group employing the SIP protocol as an example. The management information is sent in a REGISTER message of the protocol, and only the parts of the fields that are significant for the invention are described in this context. More detailed information on the SIP protocol can be obtained from IETF (Internet Engineering Task Force) publications, for example. At first, the current use of the REGISTER message is explained briefly.
REGISTER sip:listserver.example.com SIP/2.0
Via: SIP/2.0/UDP example.com:5060
From: sip:subscriberA@example.com
To: sip:subscriberB@dot.com
Call-ID: 123456789@example.com
CSeq: 1 REGISTER
Contact: UserA@123.34.345.56;
Content-Length: 0
Expires=50

In the above REGISTER message the From field includes the user identifier of the sender of the message, and the To field includes the user identifier of the user whose location data should be updated. In general, the contents of both From and To fields are identical, but in this example subscriber A wishes to update or inform about the location of subscriber B. The Contact field is an optional field, and the REGISTER message may comprise several such fields. The Contact field includes an address, from which the address in the To field can be reached. The Expires field in the registration message determines in seconds or dates, for example, how long the registration is valid. The Expires field is optional, however, in such a manner that if the Expires field does not indicate otherwise, then one hour is set as the expiration time for the registration in the system. The Expires field can be separately connected to each contact, i.e. function as the parameter of the Contact field. Alternatively the message transfers the Expires value as a specific field, in which case it holds true for all contacts.

Let us next take a closer look at a preferable registration message according to the solution of the invention. The message enables the user to create a new user group.
REGISTER sip:listserver.example.com SIP/2.0
Via: SIP/2.0/UDP example.com:5060
From: sip:subscriberA@example.com
To: sip:listname@example.com
Call-ID: 123456789@example.com
CSeq: 1 REGISTER
Contact: UserA@example.com;list=add
Contact: UserB@example.com;list=add
Contact: UserC@example.com;list=add
Contact: UserD@example.com;list=add
Content-Type: application/xml
Content-Length: 50
.....XML description of the group properties...

The sender of a message, or in this case the creator of the message, is placed in the sender field (From field). The name of a new user group is placed in the target field (To field). The users of a group are placed in four contact fields (Contact field). Each contact field also includes a function indicator (list) that indicates a function for the server receiving the message that is associated with said user identifier. The function indicator may receive the value "add" when a group is being created. Another alternative during the creation of a user group is that the function indicators are not taken into account at all when contacts are made, instead the telecommunication network knows from the new group name that a new user group is concerned, in which case all contacts refer to users that can be added to the group. The message may optionally also include user group properties, which are transferred as message contents, for example as an XML description. Here, the user group properties refer to a property relating to the use of a group, such as the maximum length of the messages to be sent. The field contents of an acknowledgment message "SIP 200 OK" sent from the network of the REGISTER message are substantially in line with the above described registration message, i.e. the target field (To) transfers the user group identifier, for example. The procedure described above can also be used for adding new contacts to the already existing registration using the value "add" of the function indicator. In accordance with the prior art the new contacts of the registration message in the SIP protocol replace the old ones, and no additions can be made to the previous contacts.
SIP/2.0 200 OK
Via: SIP/2.0/UDP example.com:5060
From: sip:subscriberA@example.com
To: sip:listname@example.com
Call-ID: 123456789@example.com
CSeq: 1 REGISTER
Contact: UserA@example.com
Contact: UserB@example.com
Contact: UserC@example.com
Contact: UserD@example.com
Expires: 30

In the following, an example is shown concerning an inquiry about the user group contents and an acknowledgement message obtained thereto. The user group inquiry message preferably includes the user group name in the target field thereof. The fact that the message does not contain any Contact or Expires fields informs the network that information updating is not concerned but an inquiry. The acknowledgement message contains all existing contacts, i.e. the users of the user group. The user identifier in the sender field can be authenticated using a standard authentication procedure of the SIP protocol. This ensures, for instance, that only the creator of the user group has a chance to carry out an inquiry and to obtain information about the users belonging to the user group.
REGISTER sip:listserver.example.com SIP/2.0
Via: SIP/2.0/UDP example.com:5060
From: sip:subscriberA@example.com
To: sip:listname@example.com
Call-ID: 123456789@example.com
CSeq: 2 REGISTER
Content-Length: 0

SIP/2.0 200 OK
Via: SIP/2.0/UDP example.com:5060
From: sip:subscriberA@example.com
To: sip:listname@example.com
Call-ID: 123456789@example.com
CSeq: 2 REGISTER
Contact: UserA@example.com
Contact: UserB@example.com
Contact: UserC@example.com
Contact: UserD@example.com
Expires: 30

Next, the modification of the user group is shown. Before modification, the user group comprises users UserA to UserD, whereof UserC is deleted and UserE is a user to be added to the group. The function indicator associated with the contact field indicates the function associated with the user.
REGISTER sip:listserver.example.com SIP/2.0
Via: SIP/2.0/UDP example.com:5060
From: sip:subscriberA@example.com
To: sip:listname@example.com
Call-ID: 123456789@example.com
CSeq: 3 REGISTER
Contact: UserC@example.com;list=delete
Contact: UserE@example.com;list=add...

SIP/2.0 200 OK
Via: SIP/2.0/UDP example.com:5060
From: sip:subscriberA@example.com
To: sip:listname@example.com
Call-ID: 123456789@example.com
CSeq: 3 REGISTER
Contact: UserA@example.com
Contact: UserB@example.com
Contact: UserD2example.com
Contact: UserE@example.com
Expires=10

The user group is deleted for example using a REGISTER message presented in the following. An asterisk * in the contact field signifies that the operation is directed to all contacts and the value 0 in the Expires field indicates that the validity time of the contacts expires.
REGISTER sip:listserver.example.com SIP/2.0
Via: SIP/2.0/UDP example.com:5060
From: sip:subscriberA@example.com
To: sip:listname@example.com
Call-ID: 123456789@example.com
CSeq: 4 REGISTER
Contact: *;list=delete
Content-Length: 0
Expires=0

Another alternative is to indicate the expiration of the validity time of the user group using the Expires field indicating expiration, in which case the list parameter in the contact field is not required at all.
REGISTER sip:listserver.example.com SIP/2.0
Via: SIP/2.0/UDP example.com:5060
From: sip:subscriberA@example.com
To: sip:listname@example.com
Call-ID: 123456789@example.com
CSeq: 4 REGISTER
Contact:*
Expires=0

SIP/2.0 200 OK
Via: SIP/2.0/UDP example.com:5060
From: sip:subscriberA@example.com
To: sip:listname@example.com
Call-ID: 123456789@example.com
CSeq: 4 REGISTER
Content-Length: 0
Expires=0

Only the parts of the messages according to the SIP protocol essential for the invention are shown above. The messages according to the protocols comprise other fields too but the description thereof is not relevant for the invention in this context.

Even though the invention has been described above with reference to the example of the accompanying drawings, it is obvious that the invention is not restricted thereto but can be modified in various ways within the scope of the inventive idea disclosed in the attached claims.

## Claims

1. A method for managing users groups in a communication system where a registration message (200) is sent for updating the location information of a user in the communication system, **characterized in that**
said registration message (200) is used for sending management information concerning the user group.

2. A method as claimed in claim 1, **characterized in that** the management information allows implementing one or more of the following services associated with the user group in the communication system: transmission of instant messages, transmission of presence information.

3. A method as claimed in claim 1, **characterized in that** the messages of the user are sent to the user identifiers belonging to the user group, and that the user obtains delivery information as a response to the message sent concerning the users belonging to the user group.

4. A method as claimed in claim 1, **characterized in that** the management information allows implementing one or more of the following services in the communication system: creation of a new user group, deletion on a user group, addition of users to the user group, deletion of users from the user group.

5. A method as claimed in claim 1, **characterized in that** the management information allows implementing one or more of the following services in the communication system: modification of user group properties, inquiry about user group properties, inquiry about information associated with the user group.

6. A method as claimed in claim 1, **characterized in that** the communication system is a mobile communication system.

7. A method as claimed in claim 1, **characterized in that** the user terminal is arranged to use a SIP protocol (Session Initiation Protocol) when interacting with the communication system.

8. A method as claimed in claim 7, **characterized in that** said management information allows creating a new user group in such a manner that a new user group identifier is placed into the target field of the registration message in the SIP protocol, and that the user identifiers of the users to be attached to the user group are placed into one or more contact fields.

9. A method as claimed in claim 8, **characterized in that** one or more function indicators associated with said one or more contact fields indicate the operation concerning a user of the user group, such as adding the user to the user group or deleting the user from the user group.

10. A method as claimed in claim 7, **characterized in that** said management information allows deleting the user group in such a manner that the user group identifier is placed into the target field of the registration message in the SIP protocol, and the user identifiers of all users are indicated in one or more contact fields.

11. A method as claimed in claim 7, **characterized in that** said management information allows deleting the user group in such a manner that the user group identifier is placed into the target field of the registration message in the SIP protocol, a contact associated with deletion is placed into one or more contact fields, and the end of the validity period of the user group is indicated in the timer field.

12. A method as claimed in claim 7, **characterized in that** said management information allows modifying the user list of the user group in such a manner that the user group identifier is placed into the target field of the registration message in the SIP protocol, user identifiers are placed into one or more contact fields, the modification being associated with the users corresponding to the user identifiers, and a function indicator associated with each contact field is used to show whether an addition of a user or a deletion from the user list is concerned.

13. A method as claimed in claim 7, **characterized in that** said management information allows implementing the user group inquiry in such a manner that the user group identifier is placed into the target field of the registration message in the SIP protocol.

14. A communication system comprising means (102A to 102B) for receiving messages according to a control protocol from terminals (100A to 100D) using the communication system, the control protocol including a registration message intended for updating the location of a terminal user, **characterized in that**
said reception means (102A to 102B) are arranged to receive management information concerning a user group in said registration message, the communication system further comprising management means (102A to 102B) for managing the user group on the basis of the management information received.

15. A communication system as claimed in claim 14, **characterized in that** the management means are arranged to implement on the basis of the management information received one or more of the following services concerning the user group: transmission of instant messages, transmission of presence information.

16. A communication system as claimed in claim 14, **characterized in that** the reception means are arranged to receive an instant message from the terminal, while the communication system also comprises sending means arranged to send said instant message to the user of said terminal to the user identifiers belonging to the user group to be managed.

17. A communication system as claimed in claim 14, **characterized in that** said management means are arranged to implement one or more of the following operations by means of the management information: creation of a new user group, deletion of a user group, addition of users to the user group, deletion of users from the user group.

18. A communication system as claimed in claim 14, **characterized in that** the management information allows implementing one or more of the following functions in the communication system: modification of the user group properties, inquiry about the user group properties, inquiry about the information concerning the user group.

19. A communication system as claimed in claim 14, **characterized in that** the communication system is a mobile communication system.

20. A communication system as claimed in claim 14, **characterized in that** the control protocol is a SIP protocol (Session Initiation Protocol) and that the registration message is a REGISTER message of the SIP protocol, and that the reception means are arranged to receive the management information in one or more of the following fields in the REGISTER message: FROM, TO, CONTACT, EXPIRES.

21. A subscriber terminal comprising means for communicating with a communication system using messages according to a control protocol, said control protocol including a registration message intended for updating the location of a terminal user, **characterized in that**
said communication means are arranged to send management information of the user group in said registration message.

22. A subscriber terminal as claimed in claim 21, **characterized in that** the communication means are arranged to receive an acknowledgement message of the registration message from the communication system, the acknowledgement message including the reception acknowledgement of the management information in the user group.

23. A subscriber terminal as claimed in claim 21, **characterized in that** the communication means are arranged to send management information in the registration message associated with one or more of the following functions: creation of a new user group, deletion of a user group, addition of users to the user group, deletion of users from the user group.

24. A subscriber terminal as claimed in claim 21, **characterized in that** the communication means are arranged to send management information in the registration message associated with one or more of the following functions: modification of user group properties, inquiry about user group properties, inquiry about information associated with the user group.

25. A subscriber terminal as claimed in claim 21, **characterized in that** the communication system is a mobile communication system.

26. A subscriber terminal as claimed in claim 21, **characterized in that** the control protocol is a SIP protocol (Session Initiation Protocol) and that the registration message is a REGISTER message of the SIP protocol, and that the communication means are arranged to send management information in one or more of the following fields in the REGISTER message: FROM, TO, CONTACT, EXPIRES.
